(19) Europäisches Patentamt
European Patent Office
Office européen des brevets

(11) EP 0 553 755 B1

(12) EUROPÄISCHE PATENTSCHRIFT

(45) Veröffentlichungstag und Bekanntmachung des Hinweises auf die Patenterteilung:
**02.06.1999 Patentblatt 1999/22**

(51) Int Cl.6: **C08G 69/32**

(21) Anmeldenummer: **93101114.2**

(22) Anmeldetag: **26.01.1993**

(54) **Fasern aus aromatischem Copolyamid sowie deren Verwendung**

Fibres of an aromatic copolyamide and their use

Fibres d'un copolyamide aromatique et leur utilisation

(84) Benannte Vertragsstaaten:
**AT BE CH DE ES FR GB IE IT LI NL PT**

(30) Priorität: **27.01.1992 DE 4202165**
**28.08.1992 DE 4228619**

(43) Veröffentlichungstag der Anmeldung:
**04.08.1993 Patentblatt 1993/31**

(73) Patentinhaber: **HOECHST AKTIENGESELLSCHAFT**
**65926 Frankfurt am Main (DE)**

(72) Erfinder:
- **Jung, Holger, Dr.**
**W-6272 Niedernhausen (DE)**
- **Miess, Georg-Emerich, Dr.**
**W-8400 Regensburg (DE)**
- **Heinrich, Karl**
**W-8934 Grossaitingen (DE)**
- **Klein, Peter, Dr.**
**W-6200 Wiesbaden (DE)**

(56) Entgegenhaltungen:
**EP-A- 0 121 132**
**EP-A- 0 199 090**
**EP-A- 0 441 338**
**EP-A- 0 499 230**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 553 755 B1

## Beschreibung

Die Erfindung betrifft Fasern aus aromatischen Copolyamiden des Dicarbonsäure-Diamin-Typs, die aus ihren Lösungen in organischen Lösemitteln versponnen werden können.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Es ist bekannt, daß Fäden oder Fasern aus Polyaramiden mit hoher Festigkeit und hohem Anfangsmodul hergestellt werden können, wenn die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind beispielsweise in der Deutschen Patentschrift 22 19 703 beschrieben.

Dieses Polyamid weist eine Reihe von Vorzügen auf, seine Herstellung und seine Verarbeitung sind jedoch sehr schwierig. Wegen der Unlöslichkeit in polaren organischen Lösungsmitteln - und zwar auch in Gegenwart von anorganischen Salzen, wie Calciumchlorid oder Lithiumchlorid, als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurden beispielsweise in der Deutschen Patentschrift 25 56 883 und in der Deutschen Offenlegungsschrift 30 07 063 Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Die erhöhte Löslichkeit wird hier durch die meta-Orientierung und das Sauerstoffatom verursacht. Es besteht allerdings immer noch ein Bedarf an Aramiden, die sich aus bekannten Amid-Lösungsmitteln zu Fasern mit hohen Festigkeiten und Moduli verarbeiten lassen.

Es wurde nun gefunden, daß sich ausgewählte aromatische Copolyamide hohen Molekulargewichtes zu Fasern verarbeiten lassen, die sich durch überraschend gute mechanische Eigenschaften, wie hohe Reißfestigkeiten, hohe Anfangsmoduli und niedrige Reißdehungen, auszeichnen.

Die erfindungsgemäß eingesetzten Copolyamide sind gekennzeichnet durch die Anwesenheit ausgewählter aromatischer Diaminkomponenten in ausgewählten Mengenanteilen.

Die vorliegende Erfindung betrifft in organischen Polyamid-Lösungsmitteln lösliche aromatische Copolyamide mit einer inhärenten Viskosität von mindestens 3,5 dl/g, insbesondere mindestens 4,5 dl/g, gemessen bei 25 °C an Lösungen von 0,25 Gew.% Copolymer in N-Methylpyrrolidon, enthaltend die wiederkehrenden Struktureinheiten der Formeln Ia, Ib, Ic und gegebenenfalls Id

$$[\text{-OC-R}^1\text{-CO-NH-R}^2\text{-NH-}] \quad \text{(Ia),}$$

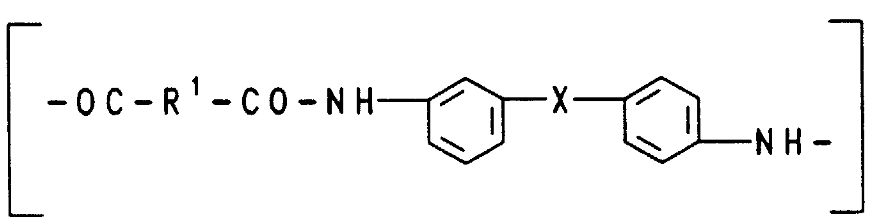

(Ib),

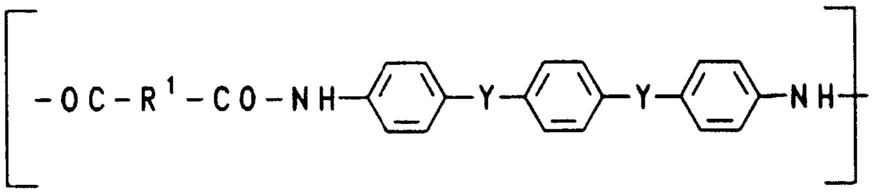 (Ic),

[-OC-$R^1$-CO-NH-$R^3$-NH-] (Id),

worin

$R^1$ 1,4-Phenylen,
$R^2$ ein unsubstituierter zweiwertiger aromatischer Rest ist, dessen Valenzbindungen sich in para- oder in vergleichbarer koaxialer oder paralleler Stellung zueinander befinden,
X eine Gruppe der Formel -S-, -$SO_2$-, -CO- oder insbesondere -O- darstellt,
Y eine der für X gegebenen Definitionen annimmt, insbesondere -O-,
$R^3$ einen von $R^2$ abweichenden Rest der Formel II und/oder der Formel III und/oder der Formel IV und/oder der Formel V darstellt

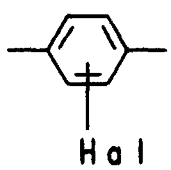 (II), 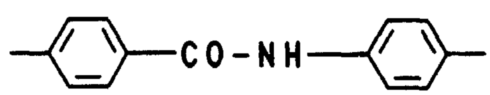 (III),

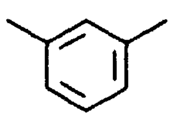 (IV), 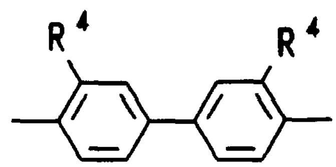 (V),

worin Hal ein Halogenatom ist, und $R^4$ $C_1$-$C_6$-Alkyl, $C_1$-$C_6$-Alkoxy und/oder Halogen bedeutet, und wobei der Anteil der wiederkehrenden Struktureinheiten Ia, Ib, Ic und Id, bezogen auf die Summe dieser Struktureinheiten im Copolymer, innerhalb folgender Grenzen liegt:

wiederkehrende Struktureinheit der Formel Ia: 40 bis 65 Mol%, vorzugsweise 45 bis 55 Mol%;
wiederkehrende Struktureinheit der Formel Ib: 5 bis 55 Mol%, vorzugsweise 35 bis 45 Mol%;
wiederkehrende Struktureinheit der Formel Ic: 5 bis 35 Mol%, vorzugsweise 5 bis 25 Mol%; und
wiederkehrende Struktureinheit der Formel Id: 0 bis 30 Mol%, vorzugsweise 0 oder 5 bis 20 Mol%.

Enthält das Copolymere wiederkehrende Struktureinheiten der Formel Id, insbesondere solche, die Reste der Formel IV aufweisen, so beträgt deren Menge vorzugsweise 5 bis 15 Mol%, ganz besonders bevorzugt 5 bis 10 Mol%, bezogen auf die Summe der Struktureinheiten Ia, Ib, Ic und Id.
Struktureinheiten der Formel Id können auch unterschiedliche Reste der Formeln II bis V enthalten, beispielsweise Reste der Formel III und V, IV und V oder III, IV, und V.
Bedeuten irgendwelche Reste zweiwertige aromatische Reste, deren Valenzbindungen sich in para- oder in vergleichbarer koaxialer oder paralleler Stellung zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert oder über C-C-Bindungen oder über eine -CO-NH-Gruppe linear miteinander verbunden sein.

Die Valenzbindungen, die in koaxialer oder paralleler zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallele, entgegengesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Stellung zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C-Bindung verknüpfte aromatische Reste mit koaxialen, entgegengesetzt gerichteten Bindungen insbesondere 4,4'-Biphenylen.

Besonders bevorzugt als Rest $R^2$ ist 1,4-Phenylen.

Beispiele für Hal-Substituenten in Resten der Formel II oder V sind Brom und insbesondere Chlor.

$R^4$ ist vorzugsweise Methoxy, insbesondere Methyl.

Zur Herstellung der Copolyamide enthaltend die wiederkehrenden Struktureinheiten Ia, Ib, Ic und gegebenenfalls Id setzt man zweckmäßigerweise ein Dicarbonsäuredichlorid der Formel X mit einem Gemisch der Diamine der Formeln VI, VII, VIII und gegebenenfalls IX um

$$ClOC\text{-}R^1\text{-}COCl \qquad (X),$$

$$H_2N\text{-}R^2\text{-}NH_2 \qquad (VI),$$

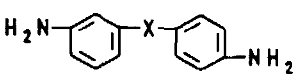 (VII), 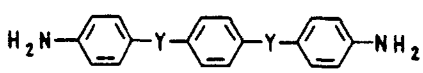 (VIII),

$$H_2N\text{-}R^3\text{-}NH_2 \qquad (IX),$$

worin die Reste $R^1$ bis $R^3$ sowie X und Y die weiter oben definierte Bedeutung aufweisen.

Das Dicarbonsäuredichlorid der Formel X und die einzelnen Diamintypen können auch in Form von Mischungen eingesetzt werden.

Die Mengenverhältnisse der Diamine VI, VII und VIII und gegebenenfalls IX sind dabei jeweils so zu wählen, daß Polyamide mit den oben definierten Mengenanteilen an Struktureinheiten der Formeln Ia, Ib, Ic und gegebenenfalls Id entstehen.

Es ist für den Fachmann selbstverständlich, daß die Summe aller von aromatischen Säuren abgeleiteten Struktureinheiten und die Summe aller von aromatischen Aminen abgeleiteten Struktureinheiten im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Das Molekulargewicht der entstehenden Polyamide läßt sich unter anderem über die Auswahl der Mengenverhältnisse von aromatischen Säuren zu aromatischen Aminen steuern. Diese Auswahlkriterien sind dem Fachmann auf dem Gebiet der Polykondensation bekannt.

Beispiele für geeignete Diamine der Formel VI sind Naphthalin-1,4-diamin, Naphthalin-1,5-diamin, Naphthalin-2,6-diamin, Benzidin und insbesondere p-Phenylendiamin.

Die Diamine der Formel VII (3,4'-Diaminodiphenylether) und der Formel VIII (1,4-Bis-(4-aminophenoxy)-benzol) sind an sich bekannt.

Beispiele für geeignete Diamine der Formel IX sind 2-Chlor-1,4-phenylendiamin, 4,4'-Diaminobenzanilid und m-Phenylendiamin, 3,5'-Dimethylbenzidin, 3,5'-Dichlorbenzidin oder 3,5'-Dimethoxybenzidin.

Die Copolymerisation der oben beschriebenen monomeren Verbindungen wird im allgemeinen als Lösungspolymerisation ausgeführt.

Dazu werden die miteinander umzusetzenden aromatischen monomeren Verbindungen in der Regel in einem organischen Lösungsmittel gelöst. Das organische Lösungsmittel enthält dabei vorzugsweise zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen von Bedeutung.

Bei einer bevorzugten Form der Durchführung der Lösungspolymerisation werden die aromatischen monomeren Diamine in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Copolymerisation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolymerisation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Copolymerisationsmischung vor, während oder nach der Copolymerisation zugesetzt wird.

Beispiele für solche Zusatzstoffe sind Alkalimetallhalogenide, wie Lithiumchlorid oder Erdalkalimetallhalogenide, wie Kalziumchlorid.

Die Polykondensationstemperaturen liegen bei der Lösungspolymerisation üblicherweise zwischen -20°C und +120°C, bevorzugt zwischen +10°C und +100°C. Besonders gute Ergebnisse werden bei Reaktionstemperaturen zwischen +10°C und +80°C erzielt.

Die Summe der Konzentrationen der aromatischen monomeren Verbindungen in der Polymerisationsgemischlösung kann unter Beachtung des gewünschten Polymerisationsgrades, der gewünschten Viskosität des Polymerisationsgemisches, der Art der verwendeten aromatischen monomeren Verbindungen, der Art des verwendeten Lösungsmittels und der gewünschten Polymerisationstemperatur eingestellt werden. Die günstigste Summe der Konzentrationen kann dabei aufgrund einer Reihe von Vorversuchen für den Ablauf der Polymerisation ermittelt werden.

Polykondensationsreaktionen werden vorzugsweise so ausgeführt, daß nach Abschluß der Reaktion 2 bis 15, vorzugsweise 5 bis 12 Gew.-% an Polykondensat in der Lösung vorliegen. Besonders gute Ergebnisse werden bei Konzentrationen von 5,0 bis 8 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von mehr als 3,5, bevorzugt mehr als 4,5, besonders bevorzugt mehr als 5,0 dl/g, insbesondere 5,5 bis 8,0 dl/g entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wird für die Zwecke der vorliegenden Erfindung bestimmt an Lösungen von jeweils 0,25 % Polymer in N-Methylpyrrolidon bei 25°C.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend kann der entstandene und salzartig an das Amidlösungsmittel gebundene Chlorwasserstoff durch Zugabe basischer Substanzen neutralisiert werden.

Geeignet sind dafür beispielsweise Lithiumhydroxyd, Calciumoxid, insbesondere aber Calciumhydroxyd.

Das bei Durchführung des oben beschriebenen Verfahrens erhaltene aromatische Copolyamid kann aus dem Copolymerisationsgemisch durch ein Trennverfahren abgeschieden werden, beispielsweise durch Präzipitation. Zur Herstellung einer Lösung für das Ausformen des Copolyamids wird das so gewonnene aromatische Copolyamid dann in einem geeigneten organischen Lösungsmittel gelöst, wobei dieses Verfahren als Auflösungsverfahren zur Herstellung der Ausformlösung bezeichnet wird.

In den Fällen, in denen zur Herstellung des aromatischen Copolyamids gemäß der Erfindung das Verfahren der Lösungspolymerisation angewandt wird, wird das Copolyamid, weil es in dem Lösungsmittel für die Polymerisation

hervorragend löslich ist, in diesem jedoch vollständig gelöst. Daher ist es bei industriellem Einsatz dieses Verfahrens vorteilhaft, daß bei der Polymerisation erhaltene Gemisch sofort als Ausformlösung für das aromatische Copolyamid zu verwenden.

Das aromatische Copolyamid gemäß der Erfindung ist in einem organischen Lösungsmittel, beispielsweise in organischen Lösungsmitteln vom Amidtyp hervorragend löslich und besitzt eine hervorragende Wärmebeständigkeit und eine überlegene chemische Widerstandsfähigkeit. Das aromatische Copolyamid ist besonders nützlich für die Herstellung von Fasern.

Der Begriff "Fasern" ist im Rahmen dieser Beschreibung in seiner breitesten Bedeutung zu verstehen; dazu zählen also zum Beispiel Filamente oder Stapelfasern beliebiger Titer.

Die Fasern besitzen nicht nur eine hervorragende Wärmebeständigkeit und chemische Beständigkeit, sondern weisen auch überlegene mechanische Eigenschaften auf, beispielsweise hinsichtlich der Zugfestigkeit, der Abriebfestigkeit und des Elastizitätsmoduls.

Bei dem Verfahren zum Herstellen der Ausformlösung des aromatischen Copolyamids wird als Lösungsmittel vorzugsweise ein Lösungsmittel vom Amidtyp verwendet, insbesondere die weiter obengenannten Lösungsmittel vom Amidtyp, bzw. eine Mischung von zwei oder mehr der genannten Verbindungen.

Für die Herstellung der Ausformlösung ist es vorteilhaft, wenn die Konzentration des aromatischen Copolyamids in einem Bereich zwischen 4 und 15 Gew.-%, insbesondere zwischen 5 und 12 Gew.-% gehalten wird. Wenn es erforderlich ist, kann die Ausformlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Calciumchlorid oder Magnesiumbromid, und zwar in einer Konzentration zwischen 0,2 und 10 %, vorzugsweise zwischen 0,5 und 5 %, bezogen auf das Gesamtgewicht der Ausformlösung. Der Zusatzstoff zur Förderung der Löslichkeit fördert dabei auch die Stabilität der Ausformlösung bei erhöhter Temperatur.

Das Ausformen der Ausformlösung zu einem geformten Artikel kann nach jedem geeigneten Trockenverfahren, Naßverfahren oder Trocken-Naßverfahren erfolgen. In den Fällen, in denen ein Naßverfahren angewandt wird, um die Ausformlösung beispielsweise zu Filamenten auszuformen, wird die Ausformlösung oder - in diesem Fall - die Spinnlösung durch eine Düse, beispielsweise eine Spinndüse, in eine koagulierende Flüssigkeit extrudiert. Dabei ist es gewöhnlich vorteilhaft, wenn die Koagulationsflüssigkeit aus Wasser oder aus einer wäßrigen, ein polares organisches Lösungsmittel enthaltenden Lösung besteht. Dabei kann das polare organische Lösungsmittel unter denselben Amid-Lösungsmitteln ausgewählt werden, die gewöhnlich für das Lösen des aromatischen Copolyamids verwendet werden.

Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0°C und der Siedetemperatur der Koagulationsflüssigkeit bei Atmosphärendruck eingesetzt.

Das polare organische Lösungsmittel liegt in der Koagulationsflüssigkeit vorzugsweise in einer Konzentration von weniger als 70 Gew.-%, insbesondere weniger als 50 Gew.-% vor.

Bei der Herstellung von Fasern aus dem aromatischen Copolyamid wird die Ausform- bzw. Spinnlösung durch einen Spinnkopf mit mehreren Spinnöffnungen extrudiert, wobei die filamentförmigen Ströme der Spinnlösung in einer der oben angegebenen Koagulationsflüssigkeiten verfestigt werden (Naßverfahren) oder in einer die Verdampfung fördernden Atmosphäre (Trockenverfahren). Eine ebenfalls geeignete Variante ist das sogenannte "Trockendüsen-Naßspinnverfahren", wie es z.B. in der US-A-34 14 645 beschrieben ist. Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt.

Beim Naßspinnen eines aromatischen Copolyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filamente des aromatischen Copolyamids in ein Wasserbad eingeleitet werden, welches auf einer Temperatur zwischen 0 und 100°C gehalten wird.

Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filamenten ausgewaschen.

Aus der vorstehenden Beschreibung wird deutlich, daß das erfindungsgemäße aromatische Copolyamid unter Verwendung üblicher Spinnverfahren und -vorrichtungen ohne weiteres zu Filamenten verarbeitet werden kann, ohne daß ein gefährliches oder schädliches Lösungsmittel, wie z.B. konzentrierte Schwefelsäure, verwendet werden müßte.

Hierdurch werden die Gefahren für das Bedienungspersonal verringert. Außerdem haben die aus dem erfindungsgemäßen Copolyamid hergestellten Filamente eine dichte interne Struktur.

Fasern die nach den vorstehend angegebenen Ausformverfahren hergestellt werden, werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische

Stabilität der so hergestellten Filamente oder Folien.

Filamente aus den erfindungsgemäßen aromatischen Copolyamiden werden in der Regel verstreckt, um eine hohe mechanische Festigkeit und einen hohen Elastizitätsmodul zu erzielen. Das Verstreckungsverhältnis beträgt dabei üblicherweise etwa 1:6 bis 1:20.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente einer weiteren Wärmebehandlung bei gleicher oder höherer Temperatur unterworfen werden, um ihre kristalline Struktur zu fördern. In diesem Zusammenhang sei darauf hingewiesen, daß das aromatische Copolyamid gemäß der Erfindung nicht nur hinsichtlich seiner Lösbarkeit in üblichen organischen Lösungsmitteln überraschend vorteilhaft ist, sondern nach der Herstellung der Fasern ohne weiteres unter "milden" Arbeitsbedingungen verstreckt werden kann.

Die aus den Copolymeren erhältlichen Fasern zeichnen sich durch hohe Reißfestigkeiten und Anfangsmoduli und durch niedrige Reißdehnungen aus.

Bevorzugt weisen die erfindungsgemäßen Fasern einen Anfangsmodul, bezogen auf 100 % Dehnung, von etwa 25 bis 60 N/tex, insbesondere 35 bis 50 N/tex und eine Reißdehnung von etwa 3 bis 7 %, insbesondere 4 bis 6 % auf.

Es wurde überraschenderweise gefunden, daß durch die Anwendung besonderer Verstreckbedingungen aus den erfindungsgemäß eingesetzten Copolyamiden Fasern hergestellt werden können, die für Aramide bislang unerreicht hohe Werte von Querfestigkeiten aufweisen bzw. die eine Kombination von außerordentlich hohen Reißfestigkeiten und Querfestigkeiten aufweisen. Als Maß für die Querfestigkeiten kann die Schlingenfestigkeit (nach DIN 53843) oder die Knotenfestigkeit (nach DIN 53842, Teil 1) herangezogen werden.

Die erfindungsgemäßen Fasern weisen Knotenfestigkeiten von 25 bis 80 cN/tex, insbesondere von 50 bis 80 cN/tex, und/oder Schlingenfestigkeiten von 40 bis 130 cN/tex, insbesondere von 85 bis 120 cN/tex, sowie eine Reißfestigkeit von mindestens 150 cN/tex auf.

Ganz besonders bevorzugte Fasern aus den erfindungsgemäß eingesetzten Copolyamiden weisen Reißfestigkeiten von mehr als 200 cN/tex, insbesondere von 200 bis 250 cN/tex, und Schlingenfestigkeiten von mehr als 80 cN/tex, insbesondere von 85 bis 120 cN/tex auf.

Die erfindungsgemäßen Fasern sind erhältlich durch Verstrecken der ersponnenen Fasern in der Hitze und unter Verwendung einer unter den Verstreckbedingungen stabilen Präparation. Solche Präparationen enthalten im wesentlichen ein partikelförmiges, inertes anorganisches Material, welches die Gleitreibung zwischen den Fasern beim Verstreckvorgang herabsetzt. Diese Präparationen werden üblicherweise aus wässriger Suspension auf die Faser aufgebracht; anschließend wird durch Trocknen eine gleichmäßige Schicht aus besagtem anorganischen Material um die Faser herum erzeugt. Beispiele für geeignete anorganische und inerte Partikel sind Graphit, Talk, kollodiale Kieselerde, wasserabweisende Kieselerde, Glimmer, hydratisiertes Magnesimsilikat, oder wässrige Dispersionen enthaltend Magnesiumsilikat und eine wässrige gelbildende anorganische Verbindung, wie Aluminiumsilikat.

Beispiele für solche Präparationen sind in den JP-A-60-239,522, JP-A-60-239,523 und der EP-A-121,132 beschrieben.

Die Verstreckung der auf diese Weise vorbehandelten Aramidfasern erfolgt im allgemeinen bei Fasertemperaturen von mehr als 300 °C, vorzugsweise bei 350 bis 550 °C. Die Verstreckgrade zur Herstellung der besonders bevorzugten Aramidfasern betragen üblicherweise 1: 8 bis 1 : 20, vorzugsweise 1 : 9 bis 1 : 15.

Die Fasern aus einem aromatischen Copolyamid gemäß der Erfindung, welche hervorragende mechanische und thermische Eigenschaften besitzen und sich durch eine hohe Verstreckbarkeit auszeichnen, können auf die verschiedenste Weise industriell eingesetzt werden, beispielsweise zur Verstärkung von Kunststoffen, insbesondere als Verstärkungsmaterialien für die Gewebeeinlagen von Autoreifen und anderen Gummiartikeln, als wärmebeständige Isolationsmaterialien, zur Herstellung von Filtergeweben und als leichte Dämmstoffe.

Weitere Eigenschaften und Vorteile der Erfindung werden nachstehend anhand von Beispielen noch näher erläutert.

Beispiel 1

Aromatisches Copolyamid aus 100 Mol% Terephthalsäuredichlorid, 50 Mol% p-Phenylendiamin, 25 Mol% 1,4-Bis-(4-aminophenoxy)-benzol und 25 Mol% 3,4'-Diaminodiphenylether

162,2 g (1,5 Mol) p-Phenylendiamin, 150,2 g (0,75 Mol) 3,4'-Diaminodiphenylether und 219,3 g (0,75 Mol) 1,4-Bis-(4-aminophenoxy)-benzol werden unter Stickstoff in 14042 g N-Methylpyrrolidon gelöst und zwischen 35°C und 55°C innerhalb von 20 Minuten 607,3g (3 Mol) Terephthalsäuredichlorid zugegeben. Bei Erreichen der gewünschten Viskosität ($\eta_{inh}$ = 5,5 dl/g) wird die Polykondensation durch Zusatz von 4,7 g Acetylchlorid abgestoppt und anschließend mit 328,2 g Calziumoxid (55 %ige Suspension in NMP) neutralisiert. Die Lösung wird bei 120°C nachgerührt. Die Lösung wird filtriert, entgast und naß versponnen. Dazu wird sie aus einer Düse mit 100 Öffnungen von jeweils

0,1 mm Durchmesser in ein Koagulationsbad, bestehend aus einer 80°C warmen Lösung von 35 % N-Methylpyrrolidon in Wasser mit einer Geschwindigkeit von 16 m/min ausgesponnen. Auf die ersponnenen Fasern werden die voranstehend erwähnten Präparationen aus wässrigen Suspensionen, die im wesentlichen ein partikelförmiges, inertes anorganisches Material enthalten, aufgebracht. Die erhaltenen Fäden werden durch zwei Wasserbäder, eine Waschmaschine, über eine Trockengalette und schließlich über Bügeleisen der Temperaturen von 400 bis 440°C auf das 11fache verstreckt.

Der Einzelfilamenttiter beträgt 1,91 dtex bei einer feinheitsbezogenen Festigkeit von 190 cN/tex, eine Dehnung von 4 % und einem Anfangsmodul von 41 N/tex, bezogen auf 100 % Dehnung.

Beispiele 2 bis 25

Nach der in Beispiel 1 beschriebenen Arbeitsweise werden weitere aromatische Copolyamide hergestellt, versponnen und geprüft. In der folgenden Tabelle I werden die verwendeten Diamine, deren Mengenverhältnisse, die Lösungsviskositäten der erhaltenen Polymeren, die Verspinnbedingungen und Eigenschaften der erhaltenen Fasern aufgeführt. In der Tabelle I werden für die Monomeren folgende Abkürzungen verwendet:

| | |
|---|---|
| TPC = | Terephthalsäuredichlorid |
| IPC = | Isophthalsäuredichlorid |
| NDC = | 2,6-Naphthalindicarbonsäuredichlorid |
| PPD = | p-Phenylendiamin |
| 3,4'-DADPE = | 3,4'-Diaminodiphenylether |
| BAPOB = | 1,4-Bis-(4-aminophenoxy)-benzol |
| 4,4'-DABA = | 4,4'-Diaminobenzanilid |
| Cl-PPD = | Chlor-para-phenylendiamin |
| MPD = | m-Phenylendiamin |
| DMB = | 3,5'-Dimethylbenzidin |

| Beispiel Nr. | 2 | 3 | 4 | 5 | 6 |
|---|---|---|---|---|---|
| TPC (mol%) | 100 | 100 | 100 | 100 | 100 |
| IPC (mol%) | 0 | 0 | 0 | 0 | 0 |
| NDC (mol%) | 0 | 0 | 0 | 0 | 0 |
| PPD (mol%) | 50 | 50 | 50 | 50 | 50 |
| 3,4'-DADPE (mol%) | 40 | 30 | 30 | 20 | 25 |
| BAPOB (mol%) | 10 | 20 | 10 | 20 | 25 |
| 4,4'-DABA (mol%) | 0 | 0 | 0 | 10 | 0 |
| Cl-PPD (mol%) | 0 | 0 | 10 | 0 | 0 |
| Konz. Spinnlösung (%) | 6 | 6 | 6 | 6 | 6 |
| inh. Visk. (dl/g) im NMP 0,25 %-ig bei 25°C | 6,3 | 4,6 | 5,8 | 6,0 | 5,9 |
| Festigkeit(cN/tex) | 184 | 160 | 170 | 163 | 190 |
| Dehnung (%) | 3,5 | 3,4 | 3,3 | 3,7 | 4,0 |
| Modul (N/tex) | 50 | 44 | 52 | 41 | 41 |
| Verstreckung 1 : | 10 | 15 | 10 | 14 | 14 |

| Beispiel Nr. | 7 | 8 | 9 | 10 | 11 | 12 | 13 |
|---|---|---|---|---|---|---|---|
| TPC (mol%) | 100 | 100 | 100 | 100 | 100 | 100 | 100 |
| IPC (mol%) | 0 | 0 | 0 | 0 | 0 | 0 | 0 |
| NDC (mol%) | 0 | 0 | 0 | 0 | 0 | 0 | 0 |

(fortgesetzt)

| Beispiel Nr. | 7 | 8 | 9 | 10 | 11 | 12 | 13 |
|---|---|---|---|---|---|---|---|
| PPD (mol%) | 50 | 50 | 50 | 45 | 40 | 45 | 45 |
| 3,4'-DADPE (mol%) | 17.5 | 45 | 35 | 40 | 50 | 45 | 50 |
| BAPOB (mol%) | 17.5 | 5 | 15 | 15 | 10 | 10 | 5 |
| 4,4'-DABA (mol%) | 15 | 0 | 0 | 0 | 0 | 0 | 0 |
| Cl-PPD (mol%) | 0 | 0 | 0 | 0 | 0 | 0 | 0 |
| Konz. Spinnlösung (%) | 6 | 10 | 8 | 10 | 10 | 6 | 12 |
| inh. Visk. (dl/g) in NMP 0,25 %-ig bei 25°C | 6,4 | 4,5 | 4,6 | 3,6 | 3,8 | 6,1 | 6,3 |
| Festigkeit(cN/tex) | 164 | 203 | 197 | 188 | 184 | 165 | 176 |
| Dehnung (%) | 3,3 | 3,8 | 3,7 | 3,5 | 3,5 | 3,4 | 3,1 |
| Modul (N/tex) | 45 | 52 | 48 | 52 | 50 | 48 | 55 |
| Verstreckung 1: | 7 | 14 | 12 | 11 | 18 | 9 | 13 |

| Beispiel Nr. | 14 | 15 |
|---|---|---|
| TPC (mol%) | 100 | 100 |
| IPC (mol%) | 0 | 0 |
| NDC (mol%) | 0 | 0 |
| PPD (mol%) | 50 | 40 |
| 3,4'-DADPE (mol%) | 22,5 | 55 |
| BAPOB (mol%) | 22,5 | 5 |
| 4,4'-DABA (mol%) | 5 | 0 |
| Cl-PPD (mol%) | 0 | 0 |
| Konz. Spinnlösung (%) | 6 | 12 |
| inh. Visk. (dl/g) in NMP 0,25 %-ig bei 25°C | 7,0 | 6,36 |
| Festigkeit(cN/tex) | 169 | 182 |
| Dehnung (%) | 3,8 | 3,2 |
| Modul (N/tex) | 40 | 55 |
| Verstreckung 1 : | 15 | 18 |

| Beispiel Nr. | 16 | 17 | 18 | 19 | 20 | 21 | 22 | 23 |
|---|---|---|---|---|---|---|---|---|
| TPC (mol%) | 100 | 100 | 100 | 100 | 100 | 100 | 100 | 100 |
| IPC (mol%) | 0 | 0 | 0 | 0 | 0 | 0 | 0 | 0 |
| NDC (mol%) | 0 | 0 | 0 | 0 | 0 | 0 | 0 | 0 |
| PPD (mol%) | 50 | 50 | 45 | 45 | 45 | 50 | 45 | 45 |
| 3,4'-DADPE (mol%) | 35 | 35 | 50 | 35 | 30 | 30 | 30 | 30 |
| BAPOB (mol%) | 15 | 15 | 5 | 15 | 15 | 10 | 10 | 5 |
| 4,4'-DABA (mol%) | 0 | 0 | 0 | 0 | 0 | 0 | 0 | 0 |
| MPD (mol%) | 0 | 0 | 0 | 5 | 10 | 10 | 15 | 20 |

(fortgesetzt)

| Beispiel Nr. | 16 | 17 | 18 | 19 | 20 | 21 | 22 | 23 |
|---|---|---|---|---|---|---|---|---|
| Konz. Spinnlösung (%) | 6 | 8 | 10 | 6 | 6 | 6 | 6 | 6 |
| inh. Visk. (dl/g) in NMP | 6,8 | 5,01 | 4 | 5,4 | 4,8 | 4,5 | 5 | 5,1 |
| Festigkeit(cN /tex) | 248 | 223 | 203 | 210 | 188 | 202 | 160 | 170 |
| Dehnung (%) | 5 | 4,4 | 3,8 | 5 | 5,4 | 5,6 | 5 | 5,2 |
| Modul (N/tex) | 50 | 48 | 52 | 42 | 36 | 38 | 35 | 36 |
| Verstreckung 1: | 12 | 9 | 10 | 9,5 | 8 | 7 | 10 | 10 |
| Schlingenfestigkeit (cN/tex) | 114 | | | 86 | 87 | 84 | | 42 |
| Knotenfestigkeit (cN/tex) | 69 | | | 59 | 53 | 63 | | 27 |

| Beispiel Nr. | 24 | 25 |
|---|---|---|
| TPC (mol%) | 100 | 100 |
| IPC (mol%) | 0 | 0 |
| NDC (mol%) | 0 | 0 |
| PPD (mol%) | 45 | 40 |
| 3,4'-DADPE (mol%) | 30 | 25 |
| BAPOB (mol%) | 10 | 5 |
| 4,4'-DABA (mol%) | 0 | 5 |
| MPD (mol%) | 0 | 5 |
| DMB | 20 | 20 |
| Konz. Spinnlösung (%) | 6 | 6 |
| inh. Visk. (dl/g) in NMP | 6,32 | 6,30 |
| Festigkeit(cN/tex) | 189 | 198 |
| Dehnung (%) | 3,5 | 3,6 |
| Modul (N/tex) | 59 | 60 |
| Verstreckung 1: | 7 | 10 |

**Patentansprüche**

1. Fasern aus in organischem Polyamid-Lösungsmittel löslichem aromatischem Copolyamid mit einer inhärenten Viskosität von mindestens 3,5 dl/g, gemessen bei 25°C an Lösungen von 0,25 Gew.-% Copolymer in N-Methylpyrrolidon, enthaltend die wiederkehrenden Struktureinheiten der Formeln Ia, Ib, Ic und gegebenenfalls Id

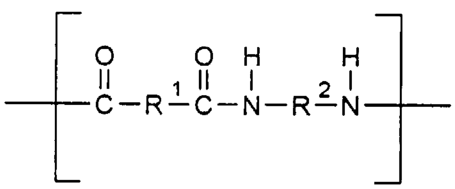

(Ia)

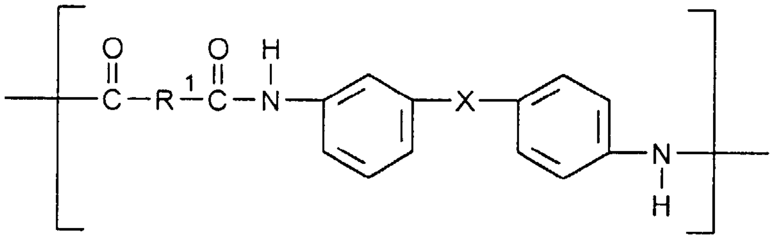

(Ib)

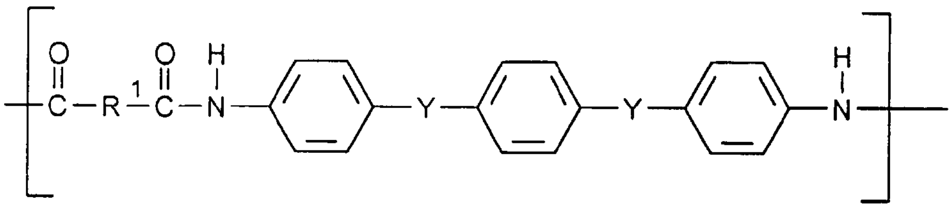

(Ic)

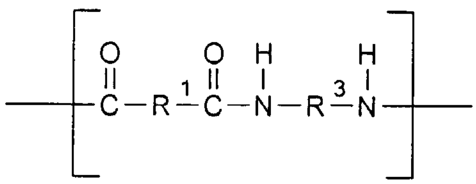

(Id)

worin

- $R^1$ 1,4 Phenylen,
- $R^2$ ein unsubstituierter zweiwertiger aromatischer Rest ist, dessen Valenzbindungen sich in para- oder in vergleichbarer koaxialer oder paralleler Stellung zueinander befinden,
- X eine Gruppe der Formel -S-, $-SO_2-$, -CO- oder -O- darstellt,
- Y eine der für X gegebenen Definitionen annimmt,
- $R^3$ einen von $R^2$ abweichenden Rest der Formel II und/oder der Formel III und/oder der Formel IV und/oder der Formel V darstellt

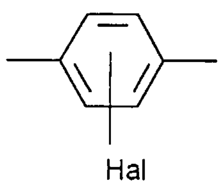

(II)

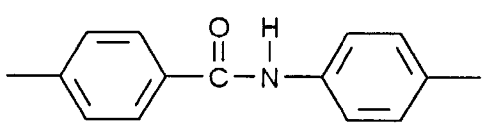

(III)

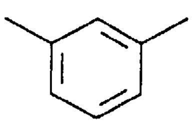

(IV)

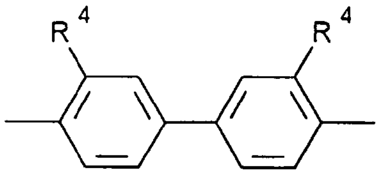

(V)

worin

Hal ein Halogenatom ist, und
$R^4$ $C_1$-$C_6$-Alkyl, $C_1$-$C_6$-Alkoxy und/oder Halogen bedeutet, und

wobei der Anteil der wiederkehrenden Struktureinheiten Ia, Ib, Ic und Id, bezogen auf die Summe dieser Struktureinheiten im Copolymer, innerhalb folgender Grenzen liegt:

| | |
|---|---|
| wiederkehrende Struktureinheit der Formel Ia | 40 bis 65 Mol%; |
| wiederkehrende Struktureinheit der Formel Ib | 5 bis 55 Mol%; |
| wiederkehrende Struktureinheit der Formel Ic und | 5 bis 35 Mol%; |
| wiederkehrende Struktureinheit der Formel Id | 0 bis 30 Mol%, |

wobei die Faser eine Reißfestigkeit von mindestens 150 cN/tex und eine Schlingenfestigkeit von mindestens 40 cN/tex aufweist, erhältlich durch ein Verfahren umfassend die Maßnahmen:

i) Herstellung von Fasern aus aromatischen Copolyamiden gemäß vorstehender Definition,
ii) Aufbringen einer wässrigen Suspension einer unter den Verstreckbedingungen stabilen Präparation, die im wesentlichen ein partikelförmiges, inertes anorganisches Material, welches die Gleitreibung zwischen den Fasern beim Verstreckvorgang herabsetzt, enthält,
iii) Trocknen der auf diese Weise vorbehandelten Faser, so daß sich eine Schicht aus besagtem anorganischen Material um die Faser herum ausbildet, und
iv) Verstrecken der der auf diese Weise vorbehandelten Faser bei Temperaturen von mehr als 300°C, insbesondere 350 bis 550°C, und mit einem Verstreckverhältnis von 1:6 und 1:20.

**2.** Faser gemäß Anspruch 1, dadurch gekennzeichnet, daß X und Y -O- bedeuten.

**3.** Faser gemäß Anspruch 1, dadurch gekennzeichnet, daß $R^2$ 1,4-Phenylen bedeutet.

**4.** Faser gemäß Anspruch 1, dadurch gekennzeichnet, daß der Anteil der wiederkehrenden Struktureinheiten Ia, Ib, Ic und Id, bezogen auf die Summe dieser Struktureinheiten, innerhalb folgender Grenzen liegt:

| | |
|---|---|
| wiederkehrende Struktureinheit der Formel Ia | 45 bis 55 Mol%; |
| wiederkehrende Struktureinheit der Formel Ib | 35 bis 45 Mol%; |
| wiederkehrende Struktureinheit der Formel Ic und | 5 bis 25 Mol%; |
| wiederkehrende Struktureinheit der Formel Id | 0 oder 5 bis 20 Mol%. |

**5.** Faser gemäß Anspruch 1, dadurch gekennzeichnet, daß $R^3$ ein Rest der Formel IV ist, und daß der Anteil der wiederkehrenden Struktureinheit der Formel Id 5 bis 15 Mol%, ganz besonders bevorzugt 5 bis 10 Mol%, bezogen auf die Summe der Struktureinheiten Ia, Ib, Ic und Id, beträgt.

**6.** Faser gemäß Anspruch 1, dadurch gekennzeichnet, daß es sich um Fasern handelt, die eine Reißfestigkeit von 150 bis 250 cN/tex, einen Anfangsmodul, bezogen auf 100 % Dehnung, von etwa 25 bis 60 N/tex und eine Reißdehnung von 3 bis 7 % aufweisen.

**7.** Faser gemäß Anspruch 6, dadurch gekennzeichnet, daß es sich um Fasern handelt, die Reißfestigkeiten von mehr als 200 cN/tex, insbesondere von 200 bis 250 cN/tex, und Schlingenfestigkeiten von mehr als 80 cN/tex, insbesondere von 85 bis 120 cN/tex aufweisen.

8. Faser gemäß Anspruch 1, dadurch gekennzeichnet, daß das partikelförmige, inerte anorganische Material Graphit, Talk, kollodiale Kieselerde, wasserabweisende Kieselerde, Glimmer, hydratisiertes Magnesiumsilikat oder Aluminiumsilikat ist.

9. Verwendung von Fasern aus aromatischen Copolyamiden gemäß Anspruch 1 zur Verstärkung von Kunststoffen, insbesondere zur Verstärkung von Elastomeren.

## Claims

1. Fibers composed of an aromatic copolyamide which is soluble in organic polyamide solvent and has an inherent viscosity of at least 3.5 dl/g, measured at 25°C in solutions of 0.25 % by weight of copolymer in N-methylpyrrolidone, containing the recurring structural units of the formulae Ia, Ib, Ic and optionally Id

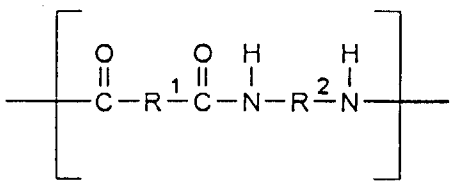

(Ia)

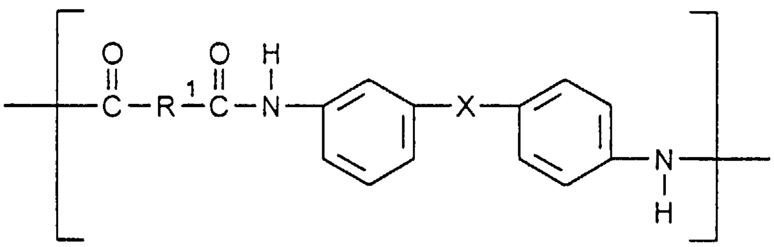

(Ib)

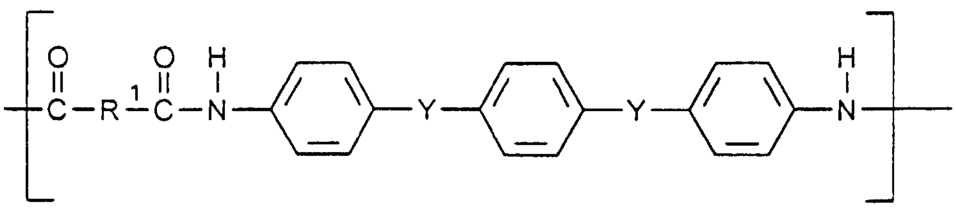

(Ic)

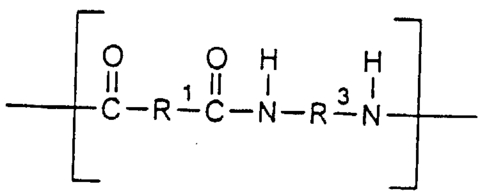

(Id)

in which

$R^1$ is 1,4-phenylene,
$R^2$ is an unsubstituted divalent aromatic radical, the valency bonds of which are in the para-position or in a comparable coaxial or parallel position with respect to one another.
X is a group of the formula -S-, $-SO_2-$, -CO- or, -O-,
Y assumes one of the definitions given for X, and

$R^3$ is a radical which differs from $R^2$ and is of the formula II and/or of the formula III and/or of the formula IV and/or of the formula V

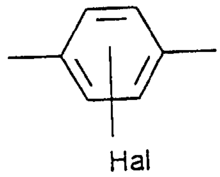

(II)

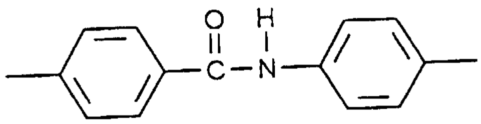

(III)

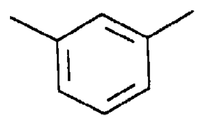

(IV)

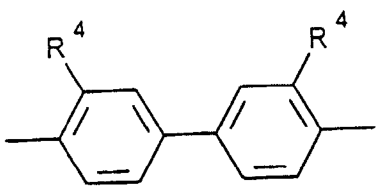

(V)

in which

Hal is a halogen atom, and
$R^4$ is $C_1$-$C_6$-alkyl, $c_1$-$C_6$-alkoxy and/or halogen, and

the proportion of recurring structural units Ia, Ib, Ic and Id, with respect to the sum of these structural units in the copolymer, is within the following limits:

recurring structural unit of the formula Ia: 40 to 65 mol %;
recurring structural unit of the formula Ib: 5 to 55 mol %;
recurring structural unit of the formula Ic: 5 to 35 mol %; and
recurring structural unit of the formula Id: 0 to 30 mol %, the fiber having a breaking strength of at least 150 cN/tex and a loop strength of at least 40 cN/tex, obtainable by a process comprising the measures:

i) production of fibers composed of an aromatic copolyamide as defined above,
ii) application of an aqueous suspension of a spin finish which is stable under the drawing conditions and which essentially comprises a particulate, inert inorganic material which lowers the sliding friction between the fibers during the drawing operation,
iii) drying of the fiber pretreated in this way, so that a layer of said inorganic material forms around the fiber, and
iv) drawing the fiber pretreated in this way at temperatures of higher than 300°C, in particular 350 to 550°C, and at a draw ratio of 1:6 and 1:20.

**2.** The fiber of claim 1, wherein X and Y are -O-.

**3.** The fiber of claim 1, wherein $R^2$ is 1,4-phenylene.

4. The fiber of claim 1, wherein the proportion of recurring structural units Ia, Ib, Ic and Id, with respect to the sum of these structural units, is within the following limits:

recurring structural unit of the formula Ia: 45 to 55 mol %;
recurring structural unit of the formula Ib: 35 to 45 mol %;
recurring structural unit of the formula Ic: 5 to 25 mol %; and
recurring structural unit of the formula Id: 0 or 5 to 20 mol %.

5. The fiber of claim 1, wherein $R^3$ is a radical of the formula IV and wherein the proportion of the recurring structural unit of the formula Id is 5 to 15 mol %, very particularly preferably 5 to 10 mol %, with respect to the sum of structural units Ia, Ib, Ic and Id.

6. The fiber of claim 1, which is fiber which has a breaking strength of 150 to 250 cN/tex, an initial modulus, with respect to 100 % elongation, of about 25 to 60 N/tex and an elongation at break of 3 to 7 %.

7. The fiber of claim 6, which is fiber which has a breaking strength of more than 200 cN/tex, in particular of 200 to 250 cN/tex, and a loop strength of more than 80 cN/tex, in particular of 85 to 120 cN/tex.

8. The fiber of claim 1, wherein the particulate, inert inorganic material is graphite, talc, colloidal silica, water-repellent silica, mica, hydrated magnesium silicate or aluminum silicate.

9. The use of fiber composed of an aromatic copolyamide as claimed in claim 1 to reinforce plastics, in particular to reinforce elastomers.

**Revendications**

1. Fibres en copolyamide aromatique soluble dans un solvant polyamide organique avec une viscosité intrinsèque d'au moins 3,5 dl/g, mesurée à 25°C sur des solutions de 0,25% en poids de copolymère dans la N-méthylpyrrolidone, contenant les motifs récurrents de structure de formules Ia, Ib, Ic et éventuellement Id

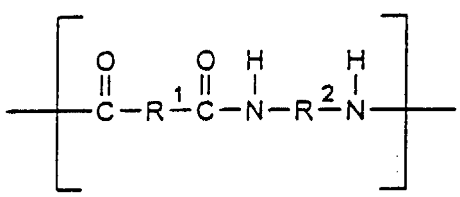

(Ia)

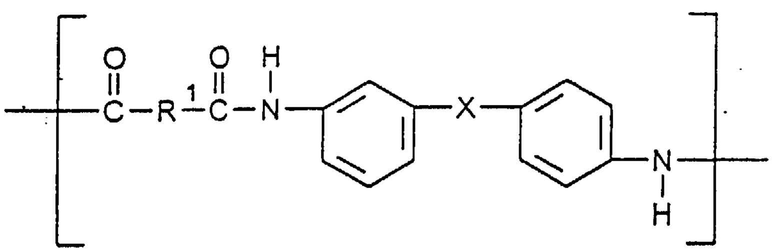

(Ib)

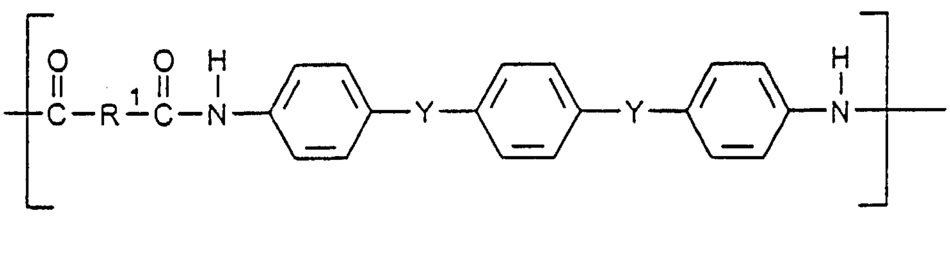

(Ic)

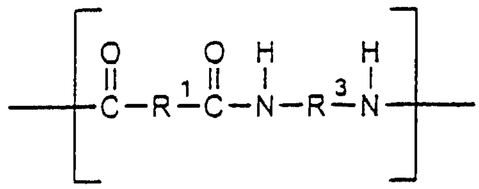

(Id)

dans lesquelles

- $R^1$ représente un groupe 1,4-phénylène,
- $R^2$ représente un groupe aromatique bivalent non substitué, dont les liaisons de valence se trouvent en position para ou en position coaxiale ou parallèle comparable les unes par rapport aux autres,
- X représente un groupe de formule -S-, $-SO_2-$, -CO- ou -O-,
- Y une des définitions données pour X,
- $R^3$ représente un groupe différent de $R^2$ de formule II et/ou de formule III et/ou de formule IV et/ou de formule V

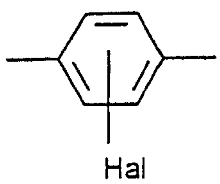

(II)

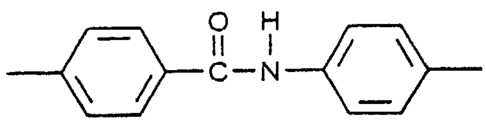

(III)

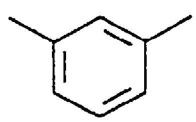

(IV)

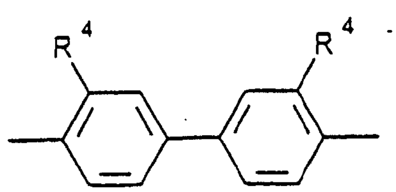

(V)

dans lesquelles

- Hal est un atome d'halogène, et
- $R^4$ représente un groupe alkyle en $C_1$-$C_6$, alcoxy en $C_1$-$C_6$ et/ou un atome d'halogène, et

pour lesquelles la teneur en motifs de structure récurrents la, Ib, Ic et Id, se situe, par rapport à la somme de ces motifs de structure dans le copolymère, à l'intérieur des limites suivantes :

| | |
|---|---|
| motif de structure de répétition de formule Ia | 40 à 65% en mole; |
| motif de structure de répétition de formule Ib | 5 à 55% en mole; |
| motif de structure de répétition de formule Ic et | 5 à 35% en mole; |

(suite)

| | |
|---|---|
| motif de structure de répétition de formule Id | 0 à 30% en mole, |

dans lesquelles la fibre présente une résistance à la traction d'au moins 150 cN/tex et une résistance en boucle d'au moins 40 cN/tex, fibres qu'on peut obtenir par un procédé comprenant les étapes consistant à :

i) fabriquer des fibres de copolyamides aromatiques selon la définition précédente,
ii) déposer une suspension aqueuse d'une préparation stable dans les conditions d'étirage, qui contient essentiellement un matériau inorganique particulaire inerte, qui diminue le frottement de glissement entre les fibres pendant l'étape d'étirage,
iii) sécher les fibres prétraitées de cette manière, de façon à former une couche dudit matériau inorganique tout autour de la fibre, et
iv) étirer les fibres prétraitées de cette manière à des températures de plus de 300°C, en particulier de 300 à 550°C, et avec un rapport d'étirement de 1:6 et 1:20.

**2.** Fibre selon la revendication 1, caractérisée en ce que X et Y représentent -O-.

**3.** Fibre selon la revendication 1, caractérisée en ce que $R^2$ représente le groupe 1,4-phénylène.

**4.** Fibre selon la revendication 1, caractérisée en ce que la teneur en motifs de structure récurrents la, Ib, Ic et Id, se situe, par rapport à la somme de ces motifs de structure, à l'intérieur des limites suivantes :

| | |
|---|---|
| motif de structure de répétition de formule Ia | 45 à 55% en mole; |
| motif de structure de répétition de formule Ib | 35 à 45% en mole; |
| motif de structure de répétition de formule Ic et | 5 à 25% en mole; |
| motif de structure de répétition de formule Id | 0 ou 5 à 20% en mole. |

**5.** Fibre selon la revendication 1, caractérisée en ce que $R^3$ est un groupe de formule IV, et en ce que la teneur du motif de structure récurrent de formule Id est de 5 à 15% en mole, de manière tout à fait particulièrement préférée de 5 à 10% en mole, par rapport à la somme des motifs de structure la, Ib, Ic et Id.

**6.** Fibre selon la revendication 1, caractérisée en ce qu'il est question de fibres, qui présentent une résistance à la traction de 150 à 250 cN/tex, un module d'élasticité, rapporté à 100% d'élongation, d'environ 25 à 60 N/tex et une élongation à la rupture de 3 à 7%.

**7.** Fibre selon la revendication 6, caractérisée en ce qu'il est question de fibres, qui présentent des résistances à la traction de plus de 200 cN/tex, en particulier de 200 à 250 cN/tex, et des résistances en boucle de plus de 80 cN/tex, en particulier de 85 à 120 cN/tex.

**8.** Fibre selon la revendication 1, caractérisée en ce que le matériau inorganique particulaire inerte est le graphite, le talc, la silice colloïdale, la silice hydrophobe, le mica, la silicate de magnésium hydraté ou le silicate d'aluminium.

**9.** Utilisation de fibres de copolyamides aromatiques selon la revendication 1 pour le renforcement de matières plastiques, en particulier pour le renforcement d'élastomères.